# EUROPEAN PATENT APPLICATION

(11) **EP 1 648 046 A1**
(43) Date of publication of application: **19.04.2006**
(21) Application number: 05109213.8
(22) Date of filing: 05.10.2005
(51) Int. Cl.: H01M 8/06

(54) **Fuel cell system**

(30) Priority: 15.10.2004 JP 2004301912
(71) Applicant: Mikuna Corporation, Iwate-gun, Iwate (JP)
(72) Inventor: TAKEHANA, Norio, Takizawa-mura Iwate-gun Iwate (JP); CHIBA, Noriaki, Takizawa-mura Iwate-gun Iwate (JP); OBARA, Shinji, Takizawa-mura Iwate-gun Iwate (JP)
(74) Representative: Betten & Resch

(57) **Abstract**

A fuel cell system in which water can be accurately supplied in accordance with the flow rate of fuel gas supplied to the reformer to allow efficient reforming without using a flow meter measuring the flow rate of water. In the fuel cell system in which fuel gas is supplied to a reformer where steam reforming is carried out to convert the fuel gas to hydrogen rich gas, and the hydrogen rich gas is supplied to a fuel cell unit to generate electricity, the pump that supplies water to the reformer is a plunger pump in which the rate of discharge of water is proportional to the rate of rotation of the motor that drives the pump. Also the fuel cell system includes a gas flow rate sensor to measure the flow rate of fuel gas supplied to the reformer, and a controller that controls the rate of rotation of the motor in accordance with the value of flow rate measured by the gas flow rate sensor.

## Description

### BACKGROUND OF THE INVENTION

### 1. Field of the Invention

The present invention relates to a fuel cell system that can supply electricity, hot water, etc., to ordinary residences for example. Specifically, it relates to a fuel cell system in which fuel gas such as city gas is steam reformed in a reformer, and the rate of supply of water is controlled to a high accuracy in accordance with the flow rate of fuel gas supplied to the reformer.

### 2. Description of the Related Art

When for example, fuel gas such as natural gas, city gas, propane gas is steam reformed and converted into hydrogen rich gas, the fuel gas and steam are mixed and supplied to the reformer, where it is reformed over a heated catalyst. When carrying out steam reforming in this way not only is it necessary to use a high performance catalyst to efficiently create hydrogen rich gas, but it is also necessary to control the rate of steam supplied to the reformer.

The steam supplied to the reformer is generated in a steam generator, and water is supplied to the steam generator by a common pump, such as a centrifugal pump, etc. The rate of steam supplied from the steam generator to the reformer, in other words the rate of water supplied to the steam generator, is controlled in accordance with the output of the fuel cell (for example, see Patent Publication No. 2710124).

### SUMMARY OF THE INVENTION

Patent Publication No. 2710124 includes a flow rate adjusting valve and flow rate detector between the pump supplying water to the steam generator and the steam generator in that order from the upstream side. Also the electricity output of the fuel cell unit is measured with a power meter. The water supply rate corresponding to the electricity output is calculated with a function generator. The value of flow rate measured by the flow rate detector and the calculated flow rate are compared by a controller, and the flow rate adjustment valve is controlled so that the rate of supply of water is equal to the calculated result.

In other words, in the prior art an expensive flow rate detector and flow rate adjustment valve are required, in addition to the pump. The overall configuration is complex, and in addition simplifying the configuration and reducing size is a problem.

The present invention aims to solve these problems of the prior art and the object thereof is to provide a fuel cell system in which fuel gas is converted into hydrogen rich gas by steam reforming in a reformer, and the hydrogen rich gas is supplied to a fuel cell unit to generate electricity. In the system the pump supplying water to the reformer is configured such that the rate of rotation of a motor which drives the pump is proportional to the rate of discharge of water.

Also, the fuel cell system contains a gas flow rate sensor to detect the flow rate of fuel gas to the reformer, and a controller for controlling the rate of rotation of the motor in accordance with the value of gas flow rate measured by the gas flow rate sensor.

According to the invention, water is supplied using a pump for which the rate of discharge of water is proportional to the rate of rotation of the motor driving the pump. Therefore by controlling the rate of rotation of the pump the rate of discharge of water is controlled deterministically. Hence the flow rate detector and flow rate adjustment valve are unnecessary, so it is possible to simplify the overall configuration, which solves the problem with the prior art as described above.

### BRIEF DESCRIPTION OF THE DRAWINGS

FIG. 1 is a conceptual and schematic block diagram of a fuel cell system according to an embodiment of the present invention; and
FIG. 2 is a cross-sectional explanatory diagram showing the main components of a plunger pump.

### DESCRIPTION OF THE PREFERRED EMBODIMENTS

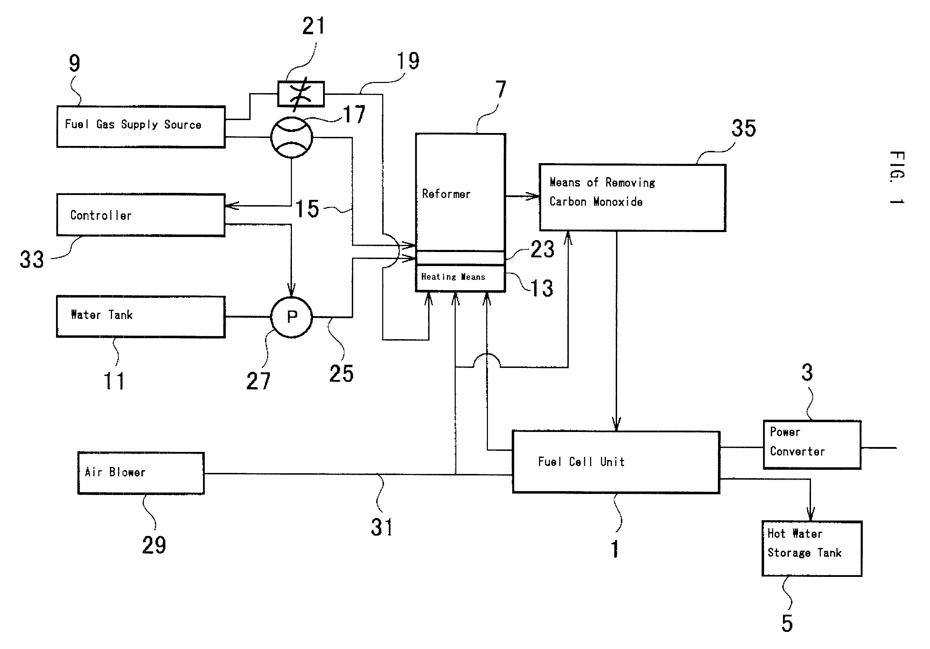

FIG. 1 shows an embodiment of a fuel cell system according to the present invention. The fuel cell system includes a fuel cell unit 1 that includes a stack of a plurality of single cells. Each single cell includes a fuel electrode catalyst layer (fuel electrode) on one side of a polymer electrolyte (ion exchange membrane), and an air electrode catalyst layer (air electrode) on the other side. This fuel cell unit 1 generates direct current electricity, so the electricity is converted into alternating current using a power converter 3 such as an inverter. Also, water generated in the fuel cell unit 1 and part of the water used for cooling is stored in a hot water storage tank 5 and supplied as hot water.

Also, the fuel cell system includes a reformer 7 for converting fuel gas, for example natural gas, city gas, propane gas, or similar, into hydrogen rich gas. In the reformer 7 a mixture of fuel gas supplied from a fuel gas supply source 9 and steam generated by heating water supplied from a water tank 11 is subjected to steam reforming reaction, in other words, steam reformed on a reforming catalyst. The reformer 7 includes heating means 13 for heating an internal reforming catalyst as well as heating and converting to steam the water (pure water) supplied from the water tank 11. The reforming catalyst is the same as a conventional catalyst, so detailed explanation of the catalyst is omitted.

The heating means 13 heats the reforming catalyst and heats the water to convert it into steam by burning fuel electrode off-gas that has been discharged without generating electricity in the fuel cell unit 1, or burning fuel gas supplied from the fuel gas supply source 9, or both.

A gas flow path 15 connects the fuel gas supply source 9 and the reformer 7, in order to supply fuel gas to the reformer 7 from the fuel gas supply source 9. A gas flow rate sensor 17 is provided in the gas flow path 15 to measure the fuel gas flow rate. Also, the gas flow path 15 includes a desulfurizer (not shown in the drawing) to remove small amounts of sulfur compounds in the fuel gas. Also, a gas flow path 19 connects the fuel gas supply source 9 and the heating means 13, and a flow rate adjustment valve 21 is provided on the gas flow path 19 to adjust the gas flow rate.

A water flow path 25 connects a steam generator 23 in the reformer 7 and the water tank 11, in order to generate steam by heating by the heating means 13. A pump 27 is provided on the water flow path 25. The pump 27 is configured so that the rate of discharge of water is proportional to the rate of rotation of the motor driving the pump, as described below.

An air blower 29 such as a blower is provided to supply air to the air electrode of the fuel cell unit 1. An air flow 31 path connects the air blower 29 and the air electrode of the fuel cell unit 1 and the heating means 13.

A controller 33 is provided to control the rate of supply of water to the steam generator 23 in accordance with the rate of supply of fuel gas to the reformer 7. The controller 33 controls the rate of rotation of a motor provided on the pump 27 in accordance with the value measured by the gas flow rate sensor 17. For example, the relationship between the value measured by the gas flow rate sensor 17 and the rate of rotation of the motor, in other words the water discharge rate, is determined in advance in a database. Therefore, when the gas flow rate is measured by the gas flow rate sensor 17 the rate of discharge from the pump 27 can be controlled deterministically in accordance with the measured value of the gas flow rate.

The reformer 7 includes means of removing carbon monoxide 35. The means of removing carbon monoxide 35 is for removing CO generated in the steam reforming reaction in the reformer 7. The means of removing carbon monoxide 35 includes a CO transformer that causes a shift reaction by a shift catalyst and a CO remover that causes a CO selective oxidation reaction by a CO selective oxidation catalyst.

In the configuration as described above, fuel gas is supplied to the reformer 7 from the fuel gas supply source 9, and water is supplied to the steam generator 23 from the water tank 11 via the pump 27. The steam generated as a result of heating by the heating means 13 and the fuel gas are mixed, and converted into a hydrogen rich gas by the steam reforming reaction of the reforming catalyst in the reformer 7. Then CO contained in the hydrogen rich gas is removed by the means of removing carbon monoxide 35.

The hydrogen gas from which CO has been removed is supplied to the fuel electrode of the fuel cell unit 1, and air is supplied to the air electrode of the fuel cell unit 1 by the action of the air blower 29. Electricity is generated when water is formed by the reaction of hydrogen and oxygen. Then electricity is supplied via the power converter 3, and water generated in the fuel cell unit 1 and water used for cooling is stored in the hot water storage tank 5 and supplied as hot water.

As stated above, when fuel gas is supplied to the reformer 7 from the fuel gas supply source 9, the fuel gas flow rate is measured by the gas flow rate sensor 17. The flow rate value measured by the gas flow rate sensor 17 is fed to the controller 33, and the controller 33 controls the rate of rotation of the pump 27 in accordance with the measured value of the gas flow rate. Therefore, the rate of supply of water to the steam generator 23 corresponds to the gas flow rate.

Therefore, even if the rate of supply of fuel gas to the reformer 7 changes, the water can be supplied at a rate appropriate to the supply of fuel gas, and steam reforming is always carried out efficiently. In other words, reforming of hydrogen rich gas can be carried out efficiently in accordance with the electricity output of the fuel cell unit 1.

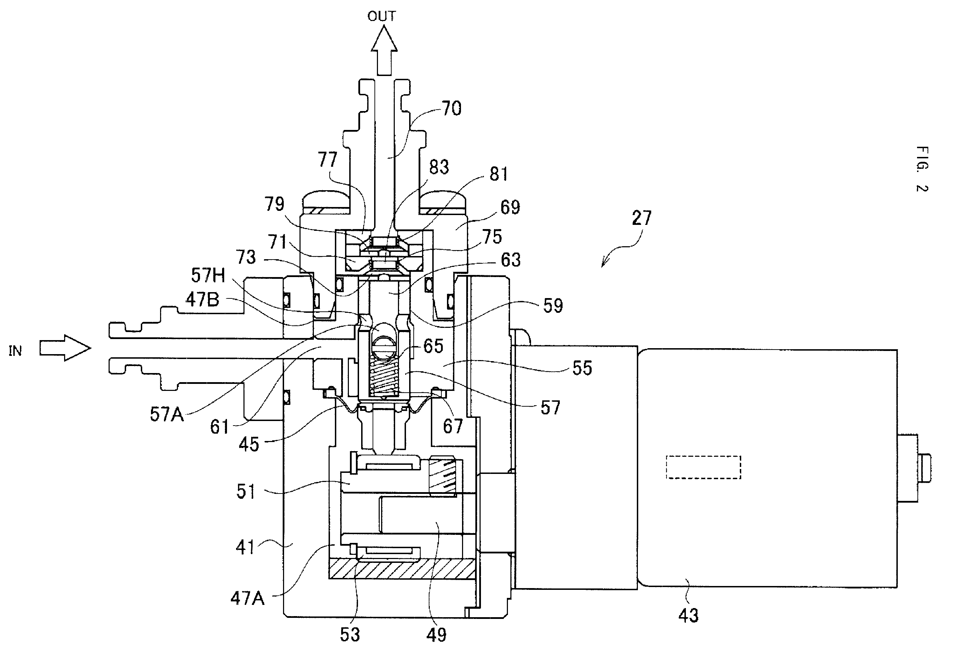

The pump 27 is a volumetric displacement pump, that intakes and discharges a predetermined volume of fluid. FIG.2 shows a plunger pump, as an example of such a pump in the present embodiment. The pump 27 includes a pump housing 41, and a suitable control motor 43 whose rotation can be easily controlled is attached to the pump housing 41. The inside of the pump housing 41 is partitioned into a drive chamber 47A and a pump chamber 47B by a diaphragm 45. A rotation shaft 49 of the motor 43 is arranged in the drive chamber 47A so as to project inward. An eccentric cam 51 is mounted integrally on the rotation shaft 49, and a rotating body 53, such as a needle bearing for example, is rotatably provided on the outer periphery of the eccentric cam 51.

An approximately cylindrical-shaped cylinder 55 is fitted and fixed in the pump chamber 47B of the pump housing 41, with the periphery of the diaphragm 45 sandwiched between the cylinder 55 and shoulders on the pump housing 41. A plunger fitting hole 59 is formed in the cylinder 55, into which a plunger 57 is fitted so that it can freely reciprocate. The plunger fitting hole 59 is connected to the water tank 11 via an intake opening 61 formed at right angles to the direction of the axis of the plunger fitting hole 59.

The inside surface of the plunger fitting hole 59 and the outside surface of the plunger 57 are provided with a diamondlike carbon (DLC) process as a corrosion prevention measure, and a very small gap of 2 to 20µm is provided therebetween. As a result, the wear resistance and corrosion resistance are improved, and life increased, as well as when the plunger 57 reciprocates to discharge water there is no water leakage, and a prescribed flow rate can be discharged with high accuracy.

The plunger 57 is formed in a pipe shape with a first end thereof (the top end thereof in FIG. 2) open and is provided with an internal hole 63, and the second end of the plunger 57 is joined integrally with the diaphragm 45. The second end of the plunger 57 is in contact with the outside surface of the rotating body 53. In order to pressure bias the second end of the plunger 57 onto the outside surface of the rotating body 53, an elongated hole 57A, elongated in the axial direction, is provided in plunger 57, and a fixing member 65 is provided that penetrates the elongated hole 57A so that the fixing member 65 can slide freely relative to the elongated hole 57A, the fixing member 65 being fixed at both ends to the cylinder 55. And then an elastic member 67 such as a coil spring is attached resiliently between the fixing member 65 and the bottom of the internal hole 63.

Therefore the plunger 57 is always pressure biased in the direction of the rotating body 53, as a result of the action of the elastic member 67. The second end of the plunger 57 is maintained in the condition that it is always in contact with the outside surface of the rotating body 53.

The cylinder 55 is fixed to the pump housing 41 by a cap block 69 fixed to the pump housing 41 by bolts or similar fasteners. The cap block 69 includes a discharge opening 70, and valve means is provided between the cap block 69 and the cylinder 55 to permit flow of water in only one direction.

In other words, a ring-shaped first valve seat 71 is provided at one end (the open end) of the plunger 57 of the pump housing 41. An intake valve 73 that permits water flow in one direction (the upward direction in FIG. 2) but prevents water flow in the reverse direction is provided between the first valve seat 71 and the open end of the plunger 57. The intake valve 73 can move freely to follow the reciprocating motions of the plunger 57. An elastic member 75 such as a coil spring is placed between the intake valve 73 and the first valve seat 71 to pressure bias the intake valve 73 against the plunger 57.

Also, a ring-shaped second valve seat 77 is provided within the cylinder 55, whose position is controlled by the cap block 69 and which is separated from the first valve seat 71. An outlet valve 79 similar to the intake valve 73 is mounted between the first valve seat 71 and the second valve seat 77 so that it can move freely. An elastic member 81 such as a coil spring is provided between the outlet valve 79 and the second valve seat 77, to pressure bias the outlet valve 79 against the first valve seat 71.

In the configuration described above, when the motor 43 drives to rotate the rotation shaft 49, the eccentric cam 51 rotates integrally, so the rotating body 53 is displaced in the vertical direction in FIG. 2. When the plunger 57 is in the highest position as shown in FIG. 2, and the rotating body 53 is displaced in the downward direction by the rotation of the rotation shaft 49, the plunger 57 moves downward as a unit due to the action of the elastic member 67.

When the plunger 57 moves in the downward direction as shown in FIG. 2 as stated above, the intake valve 73 also moves downward as a unit due to the action of the elastic member 75. When the intake valve 73 moves down, the space (a pump chamber 83) between the intake valve 73 and the outlet valve 79 is in a negative pressure state, so water from the water tank 11 flows into the pump chamber 83 via the intake opening 61, a through-hole 57H, and the internal hole 63 provided in the plunger 57. Next, when the plunger 57 moves upward as shown in FIG. 2 due to the rotation of the rotation shaft 49, the water in the pump chamber 83 is pressurized, the outlet valve 79 is opened against the elastic member 81, and the water flows into the discharge opening 70.

In other words, in the pump 27, when the rotation shaft 49 rotates driven by the motor 43, the plunger 57 reciprocates in response to the rotation of the rotation shaft 49. Therefore, the rate of water discharged from the pump 27 is determined by the relationship, the cross-sectional area of the hole in which the plunger 57 reciprocates ×the stroke of the plunger ×the rate of rotation of the motor 43. Therefore, the rate of water discharged from the pump 27 can be accurately controlled by controlling the rate of rotation of the motor 43.

As can be understood from the above explanation, in the fuel cell system, the pump 27 used to supply water to the reformer 7 is a plunger pump in which the rate of discharge of water is proportional to the rate of rotation of the motor 43 driving the pump 27. Therefore water can be accurately supplied to the reformer 7 corresponding to the flow rate of fuel gas supplied to the reformer 7. In other words, hydrogen rich gas can be reformed efficiently in accordance with the electrical output of the fuel cell unit 1, and the problem with the prior art as stated previously can be solved.

The plunger pump in the present invention is not limited to a plunger pump configured as described above. For example, configurations in which plungers are provided in a plurality of positions facing each other, or a configuration with two plungers reciprocating alternately are also possible. Also, not only plunger pumps, but volumetric displacement pumps such as diaphragm pumps or gear pumps can be used. In other words, there are many types of volumetric displacement pumps that can be used.

In summary an embodiment of the invention refers to a fuel cell system in which water can be accurately supplied in accordance with the flow rate of fuel gas supplied to the reformer to allow efficient reforming without using a flow meter measuring the flow rate of water. In the fuel cell system in which fuel gas is supplied to a reformer where steam reforming is carried out to convert the fuel gas to hydrogen rich gas, and the hydrogen rich gas is supplied to a fuel cell unit to generate electricity, the pump that supplies water to the reformer is a plunger pump in which the rate of discharge of water is proportional to the rate of rotation of the motor that drives the pump. Also the fuel cell system includes a gas flow rate sensor to measure the flow rate of fuel gas supplied to the reformer, and a controller that controls the rate of rotation of the motor in accordance with the value of flow rate measured by the gas flow rate sensor.

## Claims

1. A fuel cell system in which a fuel gas is converted into a hydrogen rich gas by steam reforming in a reformer and the hydrogen rich gas is supplied to a fuel cell unit to generate electricity, wherein a pump for supplying water to the reformer is configured such that the rate of discharge of water is proportional to the rate of rotation of a motor driving the pump.

2. The fuel cell system according to claim 1, wherein the pump is a volumetric displacement pump that intakes and discharges a predetermined volume of fluid.

3. The fuel cell system according to claim 1 or 2, further comprising:
a gas flow rate sensor for measuring the flow rate of fuel gas supplied to the reformer; and
a controller for controlling the rate of rotation of the motor in accordance with the flow rate measured by the gas flow rate sensor.
